Europäisches Patentamt

European Patent Office

Office européen des brevets

(11) Publication number: **0 433 033 A1**

## EUROPEAN PATENT APPLICATION

(21) Application number: 90313479.9

(51) Int. Cl.⁵: **A01G 1/04**

(22) Date of filing: **11.12.90**

(30) Priority: **12.12.89 JP 323200/89**

(43) Date of publication of application:
**19.06.91 Bulletin 91/25**

(84) Designated Contracting States:
**DE FR GB IT NL**

(71) Applicant: **Oyama, Shozo**
**1-33-1 Miyawakicho**
**Takamatsu 760(JP)**

(72) Inventor: **Oyama, Shozo**
**1-33-1 Miyawakicho**
**Takamatsu 760(JP)**

(74) Representative: **Coleiro, Raymond et al**
**MEWBURN ELLIS 2 Cursitor Street**
**London EC4A 1BQ(GB)**

(54) Method of cultivating mycorrhizal fungi and their fruit bodies.

(57) A method for cultivating a mycorrhizal fungus comprises: by means of a porous membrane which has fine pores through which a hypha of the mycorrhizal fungus can penetrate and pass, but through which an aqueous solution of nutrients does not permeate substantially under cultivating conditions, separating a main zone for cultivating the mycorrhizal fungus substantially from a nutrient source zone to which the aqueous solution of nutrients is to be supplied; supplying the aqueous solution of nutrients to the nutrient source zone and hyphae of the mycorrhizal fungus to the main zone and cultivating mycorrhizal fungus substantially in the main zone, thereby utilising the porous membrane as an artificial base material in which the mycorrhizal fungus is cultivated to produce a mycorrhiza.

The porous membrane may comprise a water-repellent material and may be a composite of the water-repellent material and a wettable material. It may take the form of a pipe through which the nutrient material passes.

Fig. 1

# METHOD FOR CULTIVATING MYCORRHIZAL FUNGI AND THEIR FRUIT BODIES

This invention relates to a method for cultivating mycorrhizal fungi artificially which belong to the classes Eubasidiomycetes and Euascomycetes, and relates to a method for preparing their fruit bodies.

Lentinus edodes, Flammulina velutipes, Pleurotos ostreatus, Pholiota nameko, Agaricus bisporus, etc. among the class Eubasidiomycetes have been cultivated artificially up to now and their fruit bodies have been prepared commercially. Almost all of these fungi, however, belong to wood-destroying fungi, and none of these fungi belong to the mycorrhizal fungi.

As regards the mycorrhizal fungi which grow under paraticism on a root of natural live plant, such as Tricholoma matsutake, Lactarius hatsutake, Lyophyllum shimeji, Tricholoma auratum and Tuber indicum, not limited to these, among the classes Eubasidiomycetes and Euascomycetes, their hyphae might be cultivated artificially in a test tube but their fruit bodies could be never prepared commercially.

There is a batch method of cultivation with agar medium, which have been tried up to now as one of the artificial methods for cultivating the mycorrhizal fungi.

However, even if the mycorrhizal fungus was cultivated on the culture medium by this method, it could not take in nutrients any more when the hyphae have grown and taken in all the nutrients around the hyphae. Therefore, the cultivation of mycorrhizal fungus was suffered from such a great restriction and its hyphae did not grow to a big colony which was seen in the natural circumstances, and also the fruit body was never prepared artificially.

According to "Biology of Tricholoma Matsutake" by Makoto Ogawa (Tsukiji-shokan Publishing Co., Ltd. 1984), a method is described, in which a culture medium comprises weathered soil, sand, vermiculite, urethane resin, etc. as a material supplying an aqueous solution of nutrients and as a support of hyphae, and the aqueous solution of nutrients, as the method is based on a fact that the mycorrhizal fungus grows under the ground. It is described therein, however, that the growth of hyphae was quite slow on such a culture medium basically different from the natural circumstances, and that it was very difficult to select suitable cultivating conditions, and that any fruit body had never been prepared yet, even if a good many primordia developed.

The only method for preparing the fruit bodies of mycorrhizal fungi commercially up to now, however, was to collect fruit bodies developed from the mycorrhizal fungi, being a parasite on the root of live plant naturally or being implanted artificially on the plant root.

First of all, judged from the growing conditions of mycorrhizal fungi belonging to the classes Eubasidiomycetes and Euascomycetes under the natural circumstances, a good many mycorrhizal fungi are known that they make an ectotrophic mycorrhiza with a live plant root. That is, their hyphae form an outer skin of hyphae on a root of live plant and penetrate into the root for a limited distance by breaking into between the cells of host root, and form the so-called "Hartig net". The mycorrhizal fungi continuously take in the nutrients flowing between the cells of host root and discard their waste matter. The mycorrhizal fungi are characteristic of their growth under paraticism on the root of a live plant.

The mycorrhizal fungi, also, have remarkably little capability of decomposing cellulose, lignin and starch, and hardly have capability taking in nutrients by decomposing a wood as wood-destroying fungi do. The nutrients which mycorrhizal fungi can take in from the root of plant by their mycorrhizas are characteristic of relatively low molecular compounds, such as monosacchrides and amino acids, etc., which are limited to the ones already existing as an aqueous solution in the root of plant.

Under the natural circumstances, a colony of hyphae is in a state of water impermeability and the inside of colony is kept dry. It is desirable for the mycorrhizal fungus, therefore, that it can come into contact easily with an aqueous solution of nutrients, but that the colony of hyphae is hardly soaked wet with the aqueous solution.

Surprisingly, we find that it is possible, using a specially designed porous membrane, to create artificially conditions for cultivating mycorrhizal fungi, especially those belonging to the classes Eubasidiomycetes and Euascomycetes, which sufficiently resemble the natural circumstances necessary for the mycorrhizal fungi to grow that they can be grown even up to a stage when they produce fruit bodies.

Thus, the invention provides a method for cultivating the mycorrhizal fungus under the artificial conditions, comprising: by means of a porous membrane which has fine pores through which a hypha of mycorrhizal fungus can penetrate and pass through but through which an aqueous solution of nutrients does not permeate under cultivating conditions; separating a main zone for supplying the aqueous solution of nutrients with the porous membrane; cultivating the mycorrhizal fungus substantially in the main zone; supplying the aqueous solution of nutrients to the zone for supplying the solution; and using the porous membrane as a base material with which the mycorrhizal fungus makes a mycorrhiza.

We find that, by such a method, it is possible in particular, to create conditions of temperature and humidity, and that the membrane provides a support having sufficient strength, such that the environment created is eminently suitable for the growth of the mycorrhizal fungus.

In the above-mentioned method for cultivating the mycorrhizal fungus, the membrane preferably comprises a water-repellent resin or rubber, of which the contact angle with water is more than 90 degrees. The practical water repellent material used in this invention is exemplified by water-repellent fluorine-containing resins and rubbers, water-repellent hydrocarbonic resins and rubbers, and water-repellent silicone resins and rubbers. The water-repellent porous membrane has fine pores of which the equivalent diameter preferably ranges from 0.1 to 200 microns.

Also, this invention provides a method for cultivating the mycorrhizal fungus, comprising a composite porous membrane formed or laminated with the following: a layer of porous membrane of which the material is the water-repellent organic high molecular compound of which the contact angle with water is more than 90 degrees, the porous membrane which has fine pores, ranging from 0.1 to 200 microns, preferably from 1 micron to 200 microns, through which a hypha of mycorrhizal fungus can pass but through which an aqueous solution of nutrients does not permeate substantially under cultivating conditions; and a layer of porous membrane of which the material is a wettable material of which the contact angle with water is not more than 90 degrees, the porous membrane which has pores through which a hypha of mycorrhizal fungus can pass and penetrate. The composite porous membrane also has a characteristic that the hypha of mycorrhizal fungus can penetrate and pass through the pores of composite membrane substantially.

In the composite porous membrane, the wettable porous membrane layer preferably comprises a wettable material: having the contact angle with water at not more than 90 degrees; making a composite porous membrane with a water-repellent material; being neutral to the growth of mycorrhizal fungus; and keeping a shape and size of the porous membrane without any substantial deterioration and denaturation during a cultivating period. The practical wettable material is exemplified by wettable resins and rubbers, cellulose paper, cotton, glass, etc.

In the cultivating method of this invention, the porous membrane may have a kind of practical structure such as a porous film, a foam and a porous hollow pipe of organic resins and rubbers; woven cloth, knitted cloth, nonwoven cloth, spunbond, felt and paper of organic and inorganic fibers; a cast powder, a sinter of powder, and porous ceramics; the above structure impregnated with organic resins and rubbers; and a combination of the above structure.

This invention also provides that, in the above-proposed methods for cultivating the mycorrhizal fungus, the preferable shape of the porous membrane is a pipe of which the outside is the main cultivating zone, and of which the inside is the zone for supplying the aqueous solution of nutrients.

The main cultivating zone may be covered with sterilized matter such as charcoal, polyurethane foam, polystyrene foam, vermiculite, sand, peatmoss, etc, which may be provided as pieces of material.

Further, this invention provides a method for preparing a fruit body of mycorrhizal fungus by means of fruit body developing procedure with the hyphae cultivated by the above-proposed method.

By cultivating the mycorrhizal fungus according to the method of this invention, the mycorrhizal fungus grows by means of making a mycorrhiza with an artificial base material such as the porous membrane and the pipe of porous membrane. By cultivating further, the mycorrhizal fungus forms a large colony of hyphae and can develop a fruit body. This is the effect that could not be prepared by any other methods. Some fruit bodies of mycorrhizal fungi are edible.

Other and further objects, features and advantages of the invention will appear more fully in the following description.

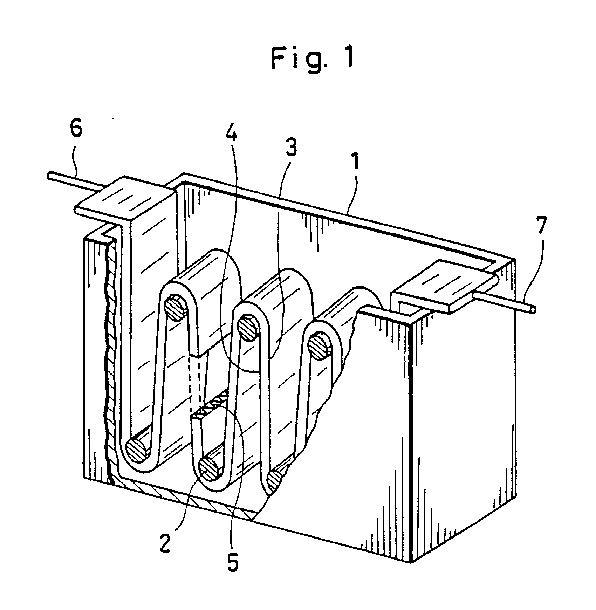

The drawing is a partially cutaway view in perspective of the apparatus used in Example 1 of this invention.

The mycorrhizal fungus, being the object of cultivation of this invention, is one of the classes Eubasidiomycetes and Euascomycetes, and is classified into ectotrophic mycorrhizal fungi: of which the class Eubasidiomycetes include, for example, the order Agaricales such as Tricholomataceae, Amanita, Clitocybe, Hygrophorus, Rozites, Cortinarius, Inocybe, Agaricus, Gomphidius, Lactarius, Russula, Boletaceae, Strobilomycetaceae, etc., the order Aphyllophorales such as Hydnum, Cantharellus, Thelephora, etc., and the order Hymenogastrales; and of which the class Euascomycetes include the order Tuberales such as Tuber, Elaphomyces, etc.

This invention is explained in detail as follows:

This invention uses a porous membrane as an artificial base material which has the same function as that of plant root being a host of mycorrhizal fungi, the porous membrane which has numerous fine pores through which the hyphae of mycorrhizal fungus can penetrate and pass but through which an aqueous solution of nutrients for cultivating the mycorrhizal fungus (hereinafter referred to "nutrient solution") does not permeate under cultivating conditions. That is, the porous membrane separates a main zone, where the mycorrhizal fungus is cultivated and where a fruit body is prepared, from a zone where the nutrient solution is supplied. It is preferable that the porous membrane has a function being a support of colony and fruit body of mycorrhizal fungus. Further, the porous membrane, under the conditions of cultivation, has a characteristic of non-leakage of nutrient solution through its pores. Even if it permeates, the leakage is very little. On the other side, the hyphae of mycorrhizal fungus require to penetrate and pass through the fine pores and require to reach to the nutrient solution and to take in nutrients. That is, it is preferable that the mycorrhizal fungus makes a mycorrhiza with the porous membrane as an artificial base material.

The words "the hyphae of mycorrhizal fungus can penetrate and pass through" mean that the hypha of mycorrhizal fungus as a subject enters the inside of a pore as it grows, and that the hypha passes through the membrane. It does not necessarily mean that the fine pores of the membrane penetrate physically the membrane at the initial state. Therefore, a suitable size of pores in the membrane and the physical state of penetration of hypha depend upon a species of mycorrhizal fungi.

The most part of hyphae of mycorrhizal fungus grows in the main cultivating zone, but a part of the hyphae may pass across the membrane, and may stretch into and grow in the zone for supplying the nutrient solution. It is not necessarily meant that the hyphae of mycorrhizal fungus grows in the main cultivating zone only.

The words "the nutrient solution does not permeate substantially" mean that the nutrient solution, which is fed and flows continuously or intermittently, hardly permeates the porous membrane, and that, even if it permeates, the amount o permeation is quite little.

The permeation of nutrient solution is in relation to the water-repellency of material of the membrane, the pore size of membrane, pressure put on the nutrient solution and the surface tension of nutrient solution. For example, if a porous membrane, of which the material is polytetrafluoro-ethylene and the diameter of its circular section of pores is 10 microns, is used horizontally, and if the properties of nutrient solution are assumed the same as those of water, it is calculated that the nutrient solution does not permeate through the pores of membrane owing to its surface tension unless the nutrient solution is pressurized at higher than 90 cm of water, as the contact angle of polytetrafluoroethylene with water is 108 degrees. On the other hand, as the velocity of organic substances, being produced by assimilation and flowing in the sieve tube cells of plant root, is generally very small, the velocity of nutrient solution in the zone for supplying the nutrient solution is supposed to be enough for the cultivation at almost the same level as that through the sieve tube cells. It is obvious that a dynamic pressure for flowing the nutrient solution at such a low velocity is quite low. Besides, a static pressure put on the porous membrane can be easily reduced to quite low by devising a cultivating apparatus. As a result, a porous membrane which the nutrient solution does not permeate nor leak through its pores, can be easily realized.

First of all, the porous membrane used in this invention is explained as follows:

The fine pores of porous membrane (hereinafter referred to "fine pores") may not necessarily have a circular section, but the equivalent diameter of fine pores is as wide as a hypha can pass through or contact the nutrient solution and ranges from 0.1 micron to 200 microns, and preferably ranges from 2 microns to 20 microns. Wherein, the equivalent diameter defines the size of a section, being not necessarily circular, by the diameter of a circle equivalent to the size of an objective section, and is generally defined with a quotient of four times the sectional area divided by the peripheral length of the section.

Anyway, the fine pores to be selected differs depending upon the species of mycorrhizal fungi, and it is assumed that the fine pores may be selected depending upon the practical usage.

Also, the ratio of the total sectional area of fine pores to the surface area of porous membrane is not particularly restricted, but the ratio more than 0.01% is usually preferable.

In order that the nutrient solution does not permeate the fine pores, a water-repellent material is used for the porous membrane, that is, a material of which the contact angle with water is more than 90 degrees. The preferable material is exemplified by water-repellent fluorine-containing high molecular compounds, that is, resins and rubbers, such as polyhexafluoropropylene, tetrafluoro ethylene-hexafluoropropene-copolymer, polytetrafluoroethylene, polytrifluoroethylene, tetrafluoroethylene-ethylene-copolymer, etc., water-repellent silicon-containing high molecular compounds, that is, silicone resins and rubbers, such as poly(dimethyl siloxane), poly(diphenylsiloxane), etc., and water-repellent hydrocarbonic high molecular compounds such as polypropylene, polyethylene, polystyrene, polybutene and poly(methylpentene) resins, polybutadiene and polyisoprene rubbers, etc. The example is not limited to these individual compounds, but comprises a copolymer which the monomer of these compounds is co-polymerized with at least another monomer in the course of polymerization process, and a compound which these polymers and copolymers are cross-linked by a cross-linker or modified by a graft polymerization etc., and a mixture or a composite of these foregoing compounds with a compound being not necessarily water-repellent, such as antioxidant, ultraviolet stabi-

4

lizer, plasticizer, filler and wettable compounds which are hereinafter described, to the extent that the water-repellency and capability forming a membrane are not damaged.

Also, the porous membrane is not limited to a single layer of membrane. In case that a porous membrane comprises plural layers, the mycorrhizal fungus can be cultivated more efficiently. For example, it is preferable to use a composite membrane which is formed or laminated with the water-repellent porous membrane and a porous membrane comprising a wettable material of which the contact angle with water is not more than 90 degrees. Wherein, the words "a composite membrane which is formed or laminated" mean a composite formed or laminated by a publicly known method, for example: a composite membrane which is formed or laminated with at least two single membranes by means of adhesion, melting or lamination; a composite membrane or a composite pipe which is filmed or spun simultaneously with at least two materials together; a membrane of which the surface (including fine pores) is modified, or on the surface of which a membrane of another material is formed or laminated by means of chemical reactions, adhesion or melting or by means of solvent removal after the solution of another material is coated on the base membrane which is used as a support, even if the other material can not necessarily form a membrane by itself; and individual plural membranes held together closely, which does not necessarily adhere, in case that a fixing means is taken not to slip off the membranes.

The reason why a composite membrane is formed with a water-repellent and a wettable material is to enable the mycorrhizal fungus to grow easily by simulating a root of plant and its surrounding circumstances in the nature. Usually, the wettable membrane is arranged alongside the main zone for cultivating the mycorrhizal fungus.

The wettable porous membrane is not necessary to have a function preventing from the permeation of nutrient solution through the composite membrane, as the water-repellent porous membrane performs the function. Accordingly, the size of pores of wettable porous membrane is not particularly restricted, provided that the hypha of mycorrhizal fungus can pass through the pores of composite membrane substantially or can contact the nutrient solution.

The wettable material is a material: of which the contact angle with water is not more than 90 degrees; which can form a composite porous membrane with a water-repellent material by any means whatever; which is neutral to the growth of mycorrhizal fungus (for example, a material containing no sterilizing agents nor fungicides); which the strength of composite membrane is enough for practical use when a composite membrane is formed with a water-repellent material; and which can keep its original shape and size substantially without any essential deterioration or denaturation for a cultivation period.

The wettable material is exemplified by organic compounds, inorganic compounds, natural compounds, semisynthetic compounds, synthetic compounds, pure compounds, mixtures and composites. The preferable example is such as: (a) thermosetting resins such as phenol resin, urea resin, melamine resin, furan resin, alkyd resin, unsaturated polyester resin, diarylphthalate resin, epoxy resin, wettable silicone resin, urethane resin, polyacrylonitrile resin, etc.; (b) thermoplastic resins such as poly(vinyl chloride) resin, poly-(vinylidene chloride) resin, poly(vinyl acetate) resin, poly(vinyl acetal) resin, poly(acrylonitrile-styrene) resin, ABS resin, polymethacrylate resin, poly(acrylic ester) resin, poly(methacrylic acid) resin, poly(acrylic acid) resin, wettable polyolefin resin, ethylene vinyl acetate copolymer, wettable fluorine-containing resin, polyamide resin, polyimide resin, polyacetal resin, polycarbonate resin, poly(phenylene oxide) resin, polysulfone resin, nitrocellulose resin, cellulose acetate resin, saturated polyester resin, etc.; (c) synthetic and natural rubbers such as styrene-butadiene rubber, acrylonitrile-butadiene rubber, chloroprene rubber, natural rubber, etc.; (d) cellulose and regenerated cellulose; (e) a compound which a monomer of the above-mentioned polymers is copolymerized with at least another monomer in the course of polymerization process; (f) a compound which the above-mentioned polymer is cross-linked with a cross-linking agent or by means of radiation such as electron rays; (g) a compound which the above-mentioned polymer is modified with at least another substance by a chemical reaction such as graft polymerization; (h) a mixture or a composite of the above-mentioned compounds with plasticizers, antioxidants, ultraviolet stabilizers, curing agents, fillers, etc.; (i) natural substances such as timber, cotton, silk, wool, flax, paper, etc; (j) inorganic substances such as ceramics, glass, sand, weathered soil, vermiculite, metal oxides etc.; and (k) a mixture and/or a composite prepared with the above-mentioned substances. The thickness of porous membrane is not particularly restricted, provided that the porous membrane has enough strength for practical usage and that the membrane has enough thickness preventing from the permeation of nutrient solution. Usually, it ranges from 1 micron to 5 millimeters. Preferably it ranges from 1 micron to 1 millimeter.

The structure of porous membrane is not particularly restricted, provided that the structure satisfies the above cultivating conditions, and that the structure is at least neutral to the growth of mycorrhizal fungus, and that the structure has enough strength, and that the structure can be essentially kept for a cultivation

5

period. The membrane structure is exemplified by a porous film, a foam, and a porous pipe of various high molecular compounds; woven cloth, knitted cloth, non-woven fabrics, spunbond, felt and paper made of organic or inorganic fibers; a structure which the above material is impregnated with an organic high molecular compound; and moldings of powder, sintered powder, porous ceramics; and composite structure comprising their combinations.

Further, the shape and arrangement of porous membrane is explained as follows:

In order to cultivate the mycorrhizal fungus and to prepare the fruit body efficiently, the porous membrane is devised to have a shape which can bring the greatest surface area in a definite volume after an enough space is secured for the growth of colony or fruit body, and is place in proper order. The example is a pipe, an envelope and a pleat. The preferable and convenient is the pipe which is placed in an efficient order to flow the nutrient solution.

In case that the shape of porous membrane is the pipe, for the convenience of cultivating operations, the inside of pipe consisting of porous membrane is assigned for the zone for supplying the nutrient solution. Accordingly, the hollow section of pipe is formed in order that the nutrient solution can flow. The section of pipe consisting of porous membrane need not necessarily to be circular. The equivalent diameter of pipe, which larger than 5 microns is not restricted, preferably ranges from 5 microns to 5 millimeters, and at the same time, it is preferable to use a pipe which the ratio of the equivalent diameter of pipe to the equivalent diameter of fine pores is larger than 2. This dimension is selected by the pressure drop of nutrient solution, the tensile strength of membrane, operability, etc.

The porous membrane is arranged and placed to give the surface area as much as possible, in suit with the properties of mycorrhizal fungus cultivated. Also, it is preferable to provide the membrane with a support having a shape suitable to support the porous membrane.

The height of cultivating zone of mycorrhizal fungus is not particularly restricted, but the preferable is usually less than 100 centimeters. Also, besides the porous membrane and its support, a temperature controller such as a pipe flowing a thermal medium etc. may be arranged in a cultivating space to control the temperature inside the colony of mycorrhizal fungus.

In case that a fruit body grows under the ground like Tuber indicum, for example, the cultivating zone may be covered up to a suitable thickness with small pieces of a sterilized substance, such as charcoal, organic plastic foam such as polyurethane foam and polystyrene foam, vermiculite, sand, weathered soil, soil, peatmoss, etc.

Next, the nutrient solution for cultivating the mycorrhizal fungus is explained as follows:

The nutrients necessary for the mycorrhizal fungus to grow and the recipes of culture medium of batch type are already publicly known, and, for example, are described in the foregoing book written by Makoto Ogawa. The nutrients required by the method of this invention is not different from those basically.

The mycorrhizal fungus utilizes carbohydrates, such as glucose, mannose, fructose, maltose and pectin, and sources of nitrogen such as arginine, citrulline, ornithine, aspartic acid, glutamic acid, serine, valine, glycine, glutamine and nitrogen contained in an ammonia group such as that of ammonium tartrate. Also, the mycorrhizal fungus requires minor elements such as vitamin B1, biotin, nicotinic acid and folic acid, and requires inorganic elements such as iron, magnesium, potassium, phosphorus, zinc, calcium and sodium.

In the mass production of mycorrhizal fungus, it is economical to provide the nutrients cultivating the mycorrhizal fungus by utilizing a nutriment comprising peptone, casein hydroxylate, corn steep liquor, yeast extract, potato extract, etc. and by blending necessary ingredients properly.

The above nutrients are solved in water at a proper concentration as a nutrient solution, of which the hydrogen ion exponent (pH) is adjusted from 4.5 to 6.0, preferably from 5.0 to 5.5. Besides, after the nutrient solution is sterilized by microfiltration or is made free of hazardous micro-organisms by sterilizing it substantially by means of other publicly known methods, the nutrient solution is fed he supply of nutrient solution is carried out continuously or intermittently, depending upon cultivating equipment and the growth of mycorrhizal fungus.

The conditions other than stated above for cultivating the mycorrhizal fungus are explained as follows:

It is important to prevent the cultivating equipment from the contamination of other miscellaneous micro-organisms during the cultivation period. The equipment, including the above-mentioned porous membrane, is made free of micro-organisms by a publicly known method before the commencement of cultivation, and is taken a strict measure to prevent from the contamination with miscellaneous micro-organisms after the implantation or inoculation of mycorrhizal fungus. It is carried out by means of publicly known methods.

The temperature range of growth of mycorrhizal fungus, such as an optimum growth temperature or fruit body developing temperature, depends upon the species of mycorrhizal fungi but almost of it is publicly known or can be assumed easily by the growing conditions in the nature.

6

In order to keep the cultivation optimum it is preferable to provide an air-conditioning equipment to control temperature and humidity in cultivating equipment. It is carried out by means of publicly known methods.

Based on the above-mentioned method, practical procedure cultivating the mycorrhizal fungus and preparing the fruit body is explained as follows:

The hyphae cultivated batchwise by a pure culture using agar medium, seed hyphae made by cutting a part of active mycorrhiza of colony or spores in a fruit body made by this method free of miscellaneous micro-organisms, are implanted or inoculated on the main cultivating zone of porous membrane or on the outer surface of pipe consisting of porous membrane being placed in the cultivating apparatus where the temperature, humidity and lightness are kept suitable for cultivating the mycorrhizal fungus. At the same time, by supplying the nutrient solution to a supplying zone of porous membrane or to the inside of a pipe consisting of porous membrane, the cultivation of mycorrhizal fungus is commenced. The nutrient solution is supplied continuously or intermittently.

Besides, in case that a wettable porous membrane faces to the main cultivating zone, a dilute solution of pectin or agar, to which the nutrients are added, is preferably coated on the surface of wettable porous membrane where spores or seed hyphae are to be inoculated or implanted. It functions to assist the hyphae or spores in fixing on the porous membrane easily.

In order to prepare the fruit body of mycorrhizal fungus, it is necessary to have the hypha of mycorrhizal fungus grow fully and to cultivate a big colony of hyphae. Cultivation of such a big colony of mycorrhizal fungus by the method of this invention is carried out by keeping the mycorrhizal fungus at the optimum temperature and humidity of growth. After the colony has been cultivated big enough to generate a fruit body, then fruit body developing procedure is carried out, that is, the cultivation temperature is changed to the one suitable for developing fruit body, which makes the mycorrhizal fungus develop a fruit body.

By repeating the procedure, the cultivation of colony and fruit body can be carried out continuously, as far as there is a space cultivating a new colony in the main cultivating zone.

In the method of this invention, a side of porous membrane, that is, a zone for supplying the nutrient solution, functions as an inside of live plant root and the other side of porous membrane, that is, a main zone for cultivating the mycorrhizal fungus, functions as an outside of live plant root. Namely, the natural conditions are well realized by the porous membrane which functions as a plant root artificially simulated.

Cultivated by the method of this invention, the mycorrhizal fungus grows in a form of mycorrhiza by utilizing the porous membrane as an artificial base material, and the hyphae form a colony in due time by continuing the cultivation. As described herein, it is necessary for preparing a fruit body that the mycorrhizal fungus grows to a big colony of hyphae and accumulates enough nutrients in the hyphae. After the hypha of mycorrhizal fungus passes through the porous membrane and contacts the nutrient solution once, the porous membrane functions to make it feasible that the hypha in the inside of colony takes in nutrients easily and continuously and discards a waste matter, as far as the hypha is alive and whatever big colony it may grow.

Besides, using a pipe of porous membrane has a merit of increasing the area of porous membrane per unit volume remarkably, the area which the hypha can use to take in nutrients.

In the cultivation method of this invention, a large quantity of nutrients being wide different from that of a batch cultivating method can be supplied to a colony of hyphae during the cultivation period, as shown in the following examples. By this effect, even if all the nutrients supplied to cultivating apparatus are not taken in by the mycorrhizal fungus, the cultivating method makes it feasible for the mycorrhizal fungus to grow to a big colony and to accumulate enough nutrients for developing the fruit body, and as a result, can eliminate the greatest obstacle in the preparation of fruit body of mycorrhizal fungus.

In the method of this invention, the nutrient solution does not permeate substantially into a main cultivating zone of porous membrane, where a colony is cultivated. The method is not only economical from the standpoint of supply of nutrient solution but also able to supply nutrients to the hyphae existing inside a colony while the inside of colony is kept dry, and functions to reach realization artificially of the same conditions as that of hyphae in the nature.

The invention will be understood more readily with reference to the following examples; however, these examples are intended to illustrate the invention and are not to be construed to limit the scope of the invention.

Example 1

The drawing is a partially cutaway view in perspective of the apparatus used to the cultivation of Tricholoma matsutake in Example 1 of this invention.

A lidless rectangular box 1 was used as a cultivating apparatus, the box which was made of stainless steel and of which the sizes were 30 cm long, 22 cm wide and 20 cm deep, and which was provided with supports 2 for a porous membrane 3. The supports 2 were a round rod of 5 mm diameter, made of stainless steel, and were placed in a stagger arrangement in the direction of the width of box at rod intervals of 3 cm at the heights of 2 cm and 12 cm from the bottom of box. A porous polypropylene membrane 3 of which the equivalent pore size was about 10 microns and the width was 20 cm and the thickness about 50 microns, and a non-porous polypropylene membrane 4 of which the width was 20 cm and the thickness was about 100 microns, were made an bag by sticking their peripheries together with an adhesive agent after spacers 5 of 3 mm thick were inserted between the membranes in order to keep a route of nutrient solution.

The bag of which the porous membrane was arranged upward, was placed in the box in zigzag by supporting the bag with the supporters 2. Both ends of the bag in a longitudinal direction were provided with an inlet 6 and an outlet 7 of nutrient solution.

This cultivating apparatus, after sterilized, was used in a cultivating room, where no miscellaneous micro-organisms contaminated, during the period of cultivation.

In the first place, the hyphae of Tricholoma matsutake, which had been pure cultivated on agar medium, were implanted in low quantities on the center of every concave part of membrane 3. Then, after sterilized by micro-filtration before its use, the nutrient solution of 300 ml per day, of which the composition was shown in the following table, was commenced to supply through the inlet 6 and to dispose of it through the outlet 7. Cultivation was carried out for about one year by keeping the temperature between 23 and 26 degrees Celsius and the humidity between 90 and 95%. After the cultivation of one year, a colony of hyphae was made convexly on the whole surface of porous membrane.

### Table

| Glucose | 20 grams/liter |
|---|---|
| Fructose | 8 grams/liter |
| Extract of yeast | 2 grams/liter |
| Peptone | 1 gram/liter |
| $KH_2 PO_4$ | 1 gram/liter |
| $MgSO_4\ 7H_2 O$ | 0.5 gram/liter |

pH was adjusted to 5.0 by adding hydrochloric acid.

Next, fruit body developing procedure was performed, that is, the cultivation was continued by changing the temperature to a fruiting body developing temperature ranging from 15 to 18 degrees Celsius. After 25 days of the procedure, numerous primordia developed on the surface of colony of hyphae, and after the succeeding 20 days a fruit body developed, of which the diameter was 6 cm and the height 10 cm.

The flavor and surface of the fruit body were not different at all from a natural one.

Example 2

Tuber indicum was cultivated by using a polypropylene pipe, of which the diameter was about 0.3 cm and the wall thickness was about 30 microns, consisting of a porous membrane which had the pores of equivalent diameter of about 10 microns.

First of all, the three pipes were twisted to a three folded yarn, and then a plain weave fabric of which the width was 90 cm and the yarn intervals were 3 mm, was woven by using the yarn as a warp and a weft. From the fabric a piece of cloth of 90 cm square was cut out. Then, in order to use a 27 cm square part of this cloth in its center as a base material for cultivation, the yarns of porous pipe, which did not pass through the part of base material, were removed from the cloth. As a result, a piece of cross-shaped cloth was prepared.

Next, a module was made by fixing the cloth on a wooden square frame of which both the width and the length were 30 cm. The wooden frame was fabricated by using wooden parts, of which the width was 1 cm and the length was 30 cm and the height was 3.5 mm for the length of 12 mm from both edges of the frame and was 3.0 mm for its intermediate part, and which had notches on both edges and a flat bottom.

Besides, two stainless steel wires of 0.5 mm diameter per frame were stretched on the frame in the direction parallel to the width in wire intervals of about 10 cm as a support of the cultivating base material. On that occasion, the upper surfaces of the stainless steel wire were placed at the same level as the upper surface of intermediate part of the wooden frame.

The module was fabricated by stretching the cloth and putting the periphery of cultivating base material of the cloth upon the wooden frame, and by sticking it on the frame by an adhesive agent.

A module assembly, about 20 cm high, was fabricated: by coating an adhesive agent on the upper surfaces of four edges of the wooden frame, where the height was 3.5 mm; and then by piling the modules by matching each four edges of wooden frame and arranging the module to cross the stainless steel wire of each module; finally by sticking 60 folded modules to one piece.

Besides, a square hollow frame of 30 cm square, 20 cm high, was sticked on the module assembly by matching it with the wooden frame of module. A square plate of 30 cm square was sticked under the module assembly as a bottom plate.

The yarns stretched from the module assembly were divided into four groups, each of which came from a block of 15 neighboring modules. The porous pipes coming from a side of the block were bundled, while keeping the pipes between the upper and lower surface of the block. Each bundle of pipes was sticked with together at its end to a rod which was connected and sticked with a non-porous tube. One end of the bundle was used as an inlet of nutrient solution. The non-porous tube connected with the bundle was connected with a main tube supplying the nutrient solution via a valve controlling the flow rate. The other end of the bundle was used as an exit of nutrient solution and was connected with a waste tank having a overflow pipe at the location 5 mm higher than an upper surface of the block. It meant that the porous pipes were bundled to two crossing groups and that each group of porous pipes provided supplying and adjustment of nutrient solution.

After sterilized, the above cultivating apparatus was used in a cultivating room free of the contamination of miscellaneous micro-organisms during the whole cultivating period. The hyphae of Tuber indicum being cultivated by agar medium were implanted in low quantities on the upper part of cultivating base material of the above module assembly at an interval of about 5 cm.

Cultivation was carried out in the same manner as Example 1 by keeping the apparatus at a temperature of 23 - 26 degrees C. and a humidity of 90 - 95 % for about one year. The nutrient solution was prepared by the same composition as the Table of Example 1 and was sterilized by microfiltration. For two months after the implantation of hyphae, the nutrient solution was supplied to two groups of pipe bundles of the highest block, by adjusting its total flow rate at about 100 milliliters/day with the controlling valve and by distributing its flow equally to the two bundles. The nutrient solution was commenced to supply to the next lower block every following two months in the same manner as that of the highest block. Finally, cultivation was carried out by supplying the nutrient solution of about 400 ml/day totally.

In about a year after the implantation, a large colony of hyphae spread over the whole cultivating apparatus.

Further, by the fruit body developing procedure which kept temperature at 12 - 17 deg. C. for 50 days, two fruit bodies of Tuber indicum, of which the diameter was about 5 cm, developed on the colony of hyphae on the cultivating base material. The flavor and surface of the fruit bodies were not different at all from a natural one.

Example 3

A cultivating apparatus was fabricated with a cultivating base material prepared by the same manner as Example 2 by using a composite porous pipe of two layer structure, consisting of polypropylene as an inside and polyamide as an outside. The equivalent diameter of fine pores on the pipe was 10 microns. The diameter of the porous pipe was 0.3 mm and its thickness was 30 microns and the thickness of each layer was 15 microns. Tricholoma matsutake was cultivated under the same conditions as those of Example 2 by using the above apparatus.

After the whole cultivating apparatus was sterilized, it was used in a cultivation room free of the contamination of miscellaneous micro-organisms. The hyphae of Tricholoma matsutake being purely cultivated on agar medium were implanted in low quantities by an interval of about 5 cm on the base material of module, which was previously coated with a nutrient solution containing a small amout of pectin.

Then, cultivation was carried out in the same manner as that of Example 2 for about one year.

As a result, a colony of hyphae was cultivated over the whole cultivating base material. After that, the temperature was lowered to 15 - 18 degrees C. as a fruit body developing procedure. On the 25th day of the procedure a good many primordia were found out. A fruit body of Tricholoma matsutake, about 15 cm high, was prepared on the 25th day after that.

The flavor and surface of the fruit bodies were not different at all from a natural one.

In the above examples some types of apparatus to practice the method of this invention are exemplified but the preferred embodiments described herein are therefore illustrative and not restrictive. Also, the dimensions and the cultivating conditions described in the examples are not restrictive to these.

**Claims**

1. A method for cultivating a mycorrhizal fungus comprising: by means of a porous membrane which has fine pores through which a hypha of the mycorrhizal fungus can penetrate and pass, but through which an aqueous solution of nutrients does not permeate substantially under cultivating conditions, separating a main zone for cultivating the mycorrhizal fungus substantially from a nutrient source zone to which the aqueous solution of nutrients is to be supplied; supplying the aqueous solution of nutrients to the nutrient source zone and hyphae of the said mycorrhizal fungus to the main zone once and cultivating the mycorrhizal fungus substantially in the main zone thereby utilising the porous membrane as an artificial base material in which the mycorrhizal fungus is cultivated to produce a mycorrhiza.

2. A method according to claim 1, wherein the mycorrhizal fungus is one of the classes Eubasidiomycetes and Euascomycetes.

3. A method according to claim 1 or claim 2, wherein the porous membrane comprises a water-repellent organic resin or rubber of which the contact angle with water is more than 90 degrees.

4. A method according to claim 3, wherein the porous membrane comprises a water-repellent material selected from water-repellent fluorine-containing resins and rubbers, water-repellent hydrocarbon resins and rubbers, and water-repellent silicone resins and rubbers.

5. A method according to claim 4, wherein the porous membrane comprises a polyolefin resin.

6. A method according to any preceding claim, wherein the equivalent pore diameter of the water-repellent porous membrane ranges from 0.1 to 200 microns inclusive.

7. A method according to any preceding claim, wherein the porous membrane comprises a composite membrane comprising: a first layer of the porous membrane of which the material is a water-repellent organic resin or rubber of which the contact angle with water is more than 90 degrees, and which first layer has fine pores through which the hypha of mycorrhizal fungus can penetrate and pass but through which the aqueous solution of nutrients does not permeate substantially under cultivating conditions, wherein the equivalent pore diameter of the first layer is from 0.1 to 200 microns; and a second layer of the porous membrane of which the material consists of a wettable material of which the contact angle with water is not more than 90 degrees, and which second layer has pores through which the hypha of mycorrhizal fungus can penetrate and pass, the hypha of a mycorrhizal fungus being capable of penetration through both of the first and second layers.

8. A method according to claim 7, wherein the said first layer comprises a water-repellent material selected from water-repellent fluorine-containing resins and rubbers, water-repellent hydrocarbon resins and rubbers, and water-repellent silicone resins and rubbers.

9. A method according to claim 7 or claim 8, wherein the second layer comprises a wettable material which is at least neutral to the growth of mycorrhizal fungus; and is capable of retaining substantially a shape and a size without any substantial deterioration and denaturation during the cultivating period.

10. A method according to claim 7, claim 8 or claim 9, wherein the second layer comprises a wettable material selected from wettable thermosetting resins, wettable thermoplastics resins, wettable synthetic rubbers, cellulose and regenerated cellulose.

11. A method according to claim 7, claim 8 or claim 9, wherein the second layer comprises a wettable material selected from paper, cotton, flax, wool, silk and timber.

12. A method according to claim 7, claim 8 or claim 9, wherein the second layer comprises a wettable material selected from ceramics, glass, sand, weathered soil and vermiculite.

13. A method according to claim 10, wherein the second layer comprises polyamide resin.

14. A method according to any preceding claim, wherein the porous membrane has a structure selected from a porous film, a foam and a porous hollow pipe of organic resins and rubbers; woven cloth, knitted cloth nonwoven cloth, spunbond, felt and paper of organic and inorganic fibers; a cast of powder, a sinter of powder, and porous ceramics; any of the above structures impregnated with organic resins and rubbers, and any of the above structures coated with organic resins; and a combination of any of the above structures.

15. A method according to any preceding claim, wherein the porous membrane is in the form of a pipe, and the outside of the pipe is the main zone for cultivating the mycorrhizal fungus and the inside of pipe is the zone for supplying the aqueous solution of nutrients.

16. A method according to any one of claims 1 to 14, wherein the porous membrane is in the form of an envelope.

17. A method according to any preceding claim, wherein the porous membrane is a pleated structure.

18. A method according to any preceding claim, wherein the main zone for cultivating the mycorrhizal fungus is covered with a sterilized matter selected from charcoal, polyurethane foam, polystyrene foam, vermiculite, sand, soil, weathered soil and peatmoss.

19. A method for preparing a fruit body of a mycorrhizal fungus by cultivating hyphae of the mycorrhizal fungus by a method according to any preceding claim.

# Fig. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 900 455  (ERNST)<br>* page 7, paragraph 4 - page 9, paragraph 1; claim 1; figures 1, 2 *<br><br>- - - - - | 1,15,19 | A 01<br>G 1/04 |

|  |  |  | TECHNICAL FIELDS SEARCHED (Int. Cl.5) |
|---|---|---|---|
|  |  |  | A 01 G |

The present search report has been drawn up for all claims

| Place of search | Date of completion of search | Examiner |
|---|---|---|
| The Hague | 21 March 91 | HERYGERS J.J. |